**Europäisches Patentamt**

**European Patent Office**

**Office européen des brevets**

(19)

(11) Veröffentlichungsnummer: **0 169 553**
**A2**

(12) # EUROPÄISCHE PATENTANMELDUNG

(21) Anmeldenummer: **85109237.9**

(22) Anmeldetag: **23.07.85**

(51) Int. Cl.⁴: **H 04 Q 11/04**
**H 04 Q 3/62**

(30) Priorität: **25.07.84 DE 3427318**

(43) Veröffentlichungstag der Anmeldung:
**29.01.86 Patentblatt 86/5**

(84) Benannte Vertragsstaaten:
**AT CH FR GB LI**

(71) Anmelder: **Kopetzky, Horst**
**Lannerstrasse 11**
**D-8025 Unterhaching(DE)**

(72) Erfinder: **Kopetzky, Horst**
**Lannerstrasse 11**
**D-8025 Unterhaching(DE)**

(54) **Digitale Zeitmultiplex-Fernsprechanlage mit kleinen Anschlusszahlen, insbesondere Fernsprechnebenstellenanlage.**

(57) Bei einer digitalen Zeitmultiplex-Fernsprechanlage mit kleinen Anschlußzahlen soll ein günstiges Verhältnis dieser Anschlußzahlen zum gesamten Bauvolumen und der Kosten pro Anschluß gegeben sein. Dies wird dadurch erreicht, daß die Satzschaltungen (TS, A, KON, TG, MFV, SA) ihrer Vermittlungsstelle (V) unabhängig von ihrem Funktionstyp vermittlungsstellenseitig gleichartige digitale Schnittstellen aufweisen und in einem Bedienungszyklus nacheinander jeweils im Hinblick auf sämtliche erforderlichen Vorgänge unabhängig von der hierfür erforderlichen Zeit bedient werden, bevor die Bedienung der nächsten Satzschaltung erfolgt. Bei Satzschaltungen (TS, A) für Fernsprechleitungen (TL, AL) sind die Analog-Digital-Wandler und digital-Analog-Wandler (A/D) auf einen Sende- und einen hiervon unterschiedenen Empfangsschlitz eingestellt. Der Sprachinformationsaustausch mit einer anderen, einer Fernsprechleitung zugehörigen Satzschaltung findet über eine bidirektional betriebene Zweidrahtleitung (SM) statt.

./...

EP 0 169 553 A2

Fig. 1

— 1 —

Digitale Zeitmultiplex-Fernsprechanlage mit kleinen Anschlußzahlen, insbesondere Fernsprechnebenstellenanlage.

Die Erfindung betrifft eine digitale Zeitmultiplex-Fernsprechanlage mit kleinen Anschlußzahlen, insbesondere
Fernsprechnebenstellenanlage.

Bei bestehenden Fernsprechanlagen dieser Art handelt es
sich häufig um für geringe Anschlußzahlen ausgenutzte Versionen von Anlagen, die von ihrem Konzept her sowohl nur
als Nebenstellenanlagen mit kleinen Anschlußzahlen als
auch über verschiedene Zwischengrößen bis hin zur großen
öffentlichen Vermittlungsanlage realisiert sein können.

Aber auch bei kleinen Fernsprechanlagen, die nicht als
Teil eines solchen Konzepts angesehen werden müssen, sind
häufig, um Entwicklungsaufwand zu sparen, Prinzipien übernommen, die für große Fernsprechanlagen zugeschnitten
sind.

Für Fernsprechanlagen, für die von vorneherein eine Beschränkung auf eine relativ kleine Anschlußzahl vorliegt, und bei denen auch der Gesichtspunkt der Erweiterbarkeit keine Rolle spielen soll, ergeben sich dabei im
Verhältnis zu diesen Anschlußzahlen ein relativ großes
Bauvolumen sowie eine unnötige Komplexität der Vermittlungssteuerung, die wiederum die Überwachung relativ aufwendig macht. Die Kosten für eine Anschlußeinheit sind
dementsprechend hoch.

Aufgabe der Erfindung ist es daher, eine digitale Zeitmultiplex-Fernsprechanlage mit kleinen Anschlußzahlen,
insbesondere Fernsprechnebenstellenanlage anzugeben, bei der ein günstiges Verhältnis der Anschlußzahlen zum gesamten Bauvolumen und der relativen Kosten vorliegt.

Diese Aufgabe wird erfindungsgemäß dadurch gelöst, daß die Satzschaltungen der Vermittlungsstelle einer solchen Fernsprechanlage unabhängig von ihrem Funktionstyp vermittlungsstellenseitig gleichartige digitale Schnittstellen aufweisen, daß diese Satzschaltungen in festen Bedienungszyklen nacheinander angesteuert werden, woraufhin sämtliche im jeweiligen Fall im Zusammenhang mit dem Aufbau, der Aufrechterhaltung, der Auslösung und der Überwachung einer Fernsprechverbindung erforderlichen Vorgänge unabhängig von ihrer Natur und von der durch sie insgesamt benötigten Zeit abgewickelt werden, bevor die nachfolgende Satzschaltung angesteuert wird, und daß im Zuge solcher Bedienungszyklen bei Satzschaltungen, die Fernsprechleitungen zugehörig sind, die dort enthaltenen Einrichtungen zu Analog-Digitalwandlung und Digital-Analogwandlung auf einen Sende- bzw. einen hiervon unterschiedenen Empfangszeitschlitz eines Pulsrahmens eingestellt werden, in denen nach Herstellung der Verbindung über eine bidirektional betriebene Zweidrahtleitung ein Sprachinformationsaustausch mit einer anderen eine Fernsprechleitung zugehörigen Satzschaltung stattfindet, deren Einrichtungen zur Analog-Digitalwandlung und Digital-Analogwandlung auf einen dem genannten Sendezeitschlitz entsprechenden Empfangszeitschlitz und auf einen dem genannten Empfangszeitschlitz entsprechenden Sendezeitschlitz eingestellt sind.

Durch die erfindungsgemäß vorgesehene Verwendung gleichartiger digitaler Schnittstellen für die Satzschaltungen, unabhängig davon, ob es sich nun um Satzschaltungen für Teilnehmeranschlußleitungen, im Falle einer Nebenstellenanlage um Satzschaltungen für Amtsleitungen, um eine Ab-

- 3 -

fragestelle oder um z.B. Mehrfrequenzen-Codeempfänger oder einen Konferenzsatz handelt, liegt eine Lösung vor, die sowohl baulich relativ einfach ist als auch gegenüber hiervon abweichenden Lösungen eine relativ einfach durchzuführenden Betriebsablauf hat, in dem auch bei der Adressierung der Satzschaltungen bzw. im Aufruf der abzuwickelnden Vorgänge keine grundsätzlichen Unterschiede gemacht zu werden brauchen.

Zur Übersichtlichkeit des Betriebsablaufs und damit zu einer leichten Überwachbarkeit desselben trägt auch, wie gemäß einem weiteren Merkmal der Erfindung vorgesehen, der Umstand bei, daß, obwohl die im Zusammenhang mit den Satzschaltungen abzuwickelnden Vorgänge einem festen Bedienungszyklus untergeordnet sind, innerhalb dieses Bedienungszyklus kein starrer Zeitrahmen eingehalten wird, also bei den einzelnen Satzschaltungen jeweils sämtliche erforderlichen Vorgänge abgewickelt werden. Wegen der vorgesehenen kleinen Anzahl von Teilnehmeranschlüssen und damit der insgesamt geringen Anzahl von Satzschaltungen erfordert diese Betriebsweise dennoch keinen derart langen Bedienungszyklus, daß dieser selbst unter ungünstigsten Verhältnissen, d.h. dann wenn bei allen Fernsprechleitungen zugeordneten Satzschaltungen z.B. sämtliche im Zusammenhang mit einem Verbindungsaufbau erforderlichen Vorgänge abzuwickeln sind, nicht ausreichen würde.

Auch die außerdem gemäß einem weiteren Merkmal der Erfindung vorgesehene dezentrale Zeitschlitzeinstellung bei den Einrichtungen zur Analog-Digitalwandlung und Digital-Analogwandlung (Codecs) sowie die durch die Zuteilung voneinander unterschiedener Sende- und Empfangszeitschlitze mögliche Informationsübertragung zwischen an die Satzschaltungen angeschlossenen Teilnehmerstationen, ohne daß eine Zeitkanalumsetzung erforderlich ist, eine Möglich-

- 4 -

keit, die natürlich den Anschlußzahlen Grenzen setzt,
trägt zur Einfachheit und Klarheit des Aufbaus- und Steuerungskonzepts bei.

Gemäß einer weiteren Ausgestaltung der Erfindung werden
in den Bedienungszykluszeitspannen nach der Bedienung von
Satzschaltungen verbleibende Zeitspannen jeweils für Überwachungsaufgaben ausgenutzt. Wie sich aus dem obenstehenden ergibt, tritt die Durchführung solcher Überwachungsaufgaben dann zurück, wenn im Zusammenhang mit den
Satzschaltungen überdurchschnittlich viele Vorgänge abzuwickeln sind.

Noch weitere Ausgestaltungen der Erfindung betreffen ebenfalls der Betriebssicherheit dienende Routinevorgänge, die
jedoch so gelegt sind, daß der normale Betriebsablauf
möglichst wenig gestört wird, nämlich einerseits das
Löschen der Schreib-Lesespeicher der Vermittlungssteuerung
der Fernsprechanlage, das jeweils dann erfolgt, wenn während eines Bedienungszyklus bei allen Satzschaltungen, die
Fernsprechleitungen zugeordnet sind, der Betriebszustand
"Ruhe" festgestellt worden ist und zum anderen das Löschen
der Einstellspeicher der Codecs, in die zum Zwecke der
Einstellung der Empfangs- und Sendezeitschlitze entsprechende Codeworte eingetragen werden, weil dieses
Löschen jeweils dann erfolgt, wenn nach Eintritt des Betriebszustandes "Ruhe" eine gewisse Zeitspanne verstrichen
ist, so daß auch dann, wenn der Betriebszustand "Ruhe"
erst nach längerem Andauern wieder verlassen wird, damit
gerechnet werden kann, daß sich der Inhalt der Einstellspeicher zwischenzeitlich nicht unzulässig verändert hat.
Die genannte Zeitspanne wird hierbei so gelegt, daß die
Dynamik des Rechenwerks der Vermittlung der Fernsprechanlage nur geringfügig belastet wird.

- 5 -

Noch eine andere Ausgestaltung der Erfindung betrifft den modularen Aufbau der Fernsprechanlage, nämlich dahingehend, daß jeweils mehrere gleichartige Schaltungen zu einer Baugruppe zusammengefaßt sind, und daß zum Austausch von Einstell- und Signalisierungsdaten zwischen den Satzschaltungen und der Vermittlungsstelle über wenigstens eine allen Baugruppen gemeinsame Datenmultiplexleitung je Baugruppe mehrere jeweils gleichartigen solcher Daten zugeordnete Multiplexer vorgesehen sind, die jeweils von einer Baugruppenadresse leitfähig geschaltet und von Satzadressen eingestellt werden.

Für die Zufuhr von Einstelldaten für die Codecs ist im Falle einer solchen modularen Gliederung eine gesonderte Datenmultiplexleitung, die an sämtliche der Codecs geführt ist, sowie eine Taktleitung vorgesehen, die zu dem jeweiligen, dieser Art von Einstelldaten der betreffenden Baugruppen zugeordneten Multiplexer führt, wobei die auf der gesonderten Datenleitung auftretenden Einstelldaten nur dann an eine Satzschaltung gelangen können, wenn die auf der Taktleitung auftretenden Taktsignale über den genannten betreffenden Multiplexer auf diese Satzschaltung durchgeschaltet sind.

Nachstehend wird die Erfindung anhand eines Ausführungsbeispiels unter Bezugnahme auf eine Zeichnung näher erläutert.

In der Zeichnung zeigen:

Fig. 1 ein Übersichtblockschaltbild der erfindungsgemäßen Fernsprechanlage.

Fig. 2 ein Detailblockschaltbild, das die Ansteuerung der Satzschaltungen veranschaulicht.

- 6 -

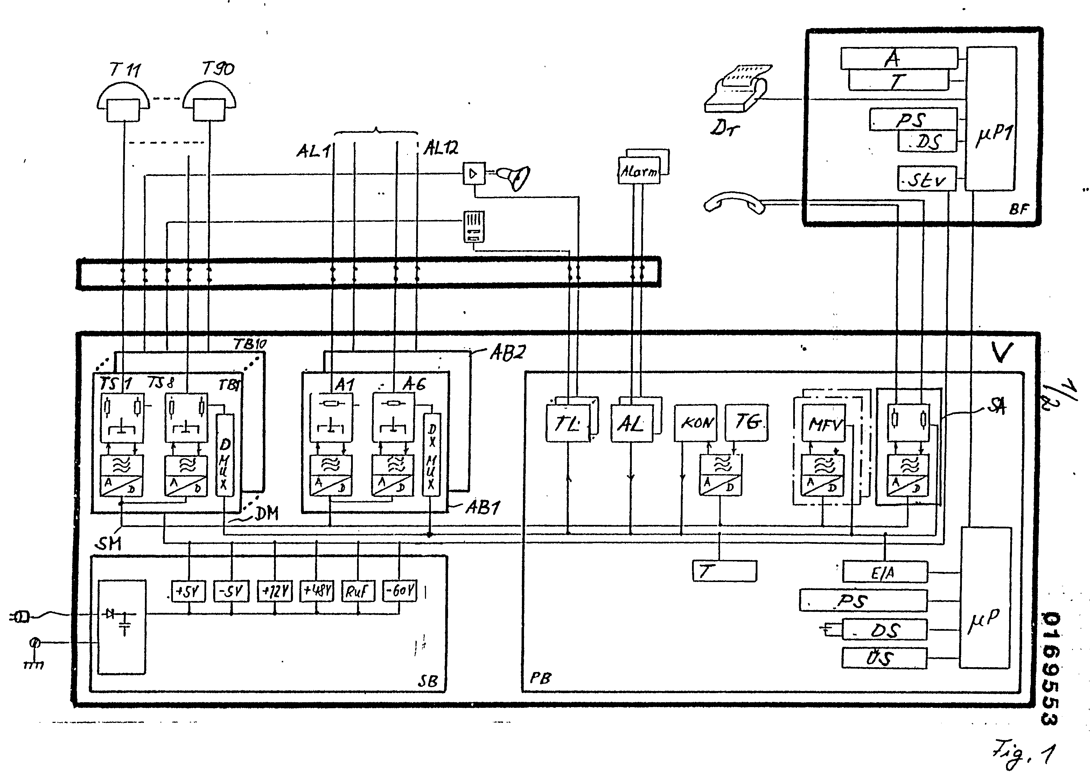

Die Fig. 1 zeigt eine erfindungsgemäße digitale Zeitmultiplex-Fernsprechanlage in Form einer Nebenstellenanlage mit Anschlußmöglichkeiten für 80 Teilnehmerstationen
T11 bis T90 und 12 Amtsleitungen AL1 bis AL12.

Bestandteil der Vermittlungsstelle V dieser Fernsprechanlage sind daher 80 Teilnehmersatzschaltungen TS, die hier
zu 10 jeweils 8 Teilnehmersatzschaltungen umfassenden
Teilnehmerbaugruppen TB1 bis TB10 zusammengefaßt sind.
Entsprechendes gilt für 12 Amtsleitungssätze A, die Bestandteil von 2 jeweils 6 solcher Sätze umfassender Amtssatzbaugruppen AB1 bzw. AB2 sind.

Weitere Satzschaltungen der Vermittlungsstelle V sind ein
Konferenzsatz KON, ein Tongenerator TG zur Erzeugung der
Hörtöne, drei Mehrfrequenzencode-Sender- bzw. -Empfänger
MFV sowie die Sprechschaltung SA einer Abfragestelle BF,
auf die weiter unten noch eingegangen wird. Die letztgenannten Satzschaltungen sind baulich Bestandteil der Prozessorbaugruppe PB der Vermittlungsstelle V, deren wesentlicher Bestandteil ein Mikroprozessor ist, an den ein Programmspeicher PS, ein Datenspeicher DS, eine Überwachungsschaltung ÜS und eine Schnittstellenschaltung E/A angeschlossen sind.

Für weitere Facilities kann die Prozessorbaugruppe einen
Alarmsatz AL aufweisen, der entweder im Zusammenhang mit
der Signalisierung von Teilen der Anlage oder aber im
Zusammenhang mit dem Anruf eines bestimmten Teilnehmers,
beispielsweise der Polizei im Falle eines Einbruchs eine
Rolle spielen kann. Der Türlautsprechersatz TL kann zur
Realisierung einer Schaltung ausgenutzt sein, mit deren
Hilfe es möglich ist, zwischen einer Türsprechanlage und
einer entfernten Teilnehmerstation eine Verbindung herzustellen.

Die vorerwähnte Abfragestelle BF stellt bei Fernsprechnebenstellenanlagen ohne Durchwahl eine Handvermittlungsstelle dar, mit der ankommende Gespräche an die einzelnen Teilnehmerstationen vermittelt werden. Von hier aus können auch Auskünfte erteilt und Berechtigungen bei einem Ruf nach außen zugeteilt werden. Soweit es sich um eine Fernsprechnebenstellenanlage mit Durchwahl handelt, ist die Abfragestelle in erster Linie ein Auskunftsplatz, in dem auch eine Gebührenerfassung möglich ist, in welchem Falle ein Drucker Dr angeschlossen ist und Berechtigungen fest eingestellt werden können. Auch die Abfragestelle enthält einen Mikroprozessor μP1 mit entsprechendem Programmspeicher PS und Datenspeicher, eine eigene Stromversorgung Stv, Anzeigeelemente A sowie Tasten T.

Zur Stromversorgung der Vermittlung ist eine Stromversorgungsbaugruppe SB vorgesehen.

Die erwähnten Satzschaltungen sind untereinander durch eine Sprachmultiplexleitung SM verbunden, bei der es sich, wie angegeben, um eine bidirektional betriebene Zweidrahtleitung handelt. Die Satzschaltungen sind ferner alle an eine Datenmultiplexleitung DM angeschlossen und über diese mit dem Mikroprozessor μP der Vermittlungsstelle V verbunden.

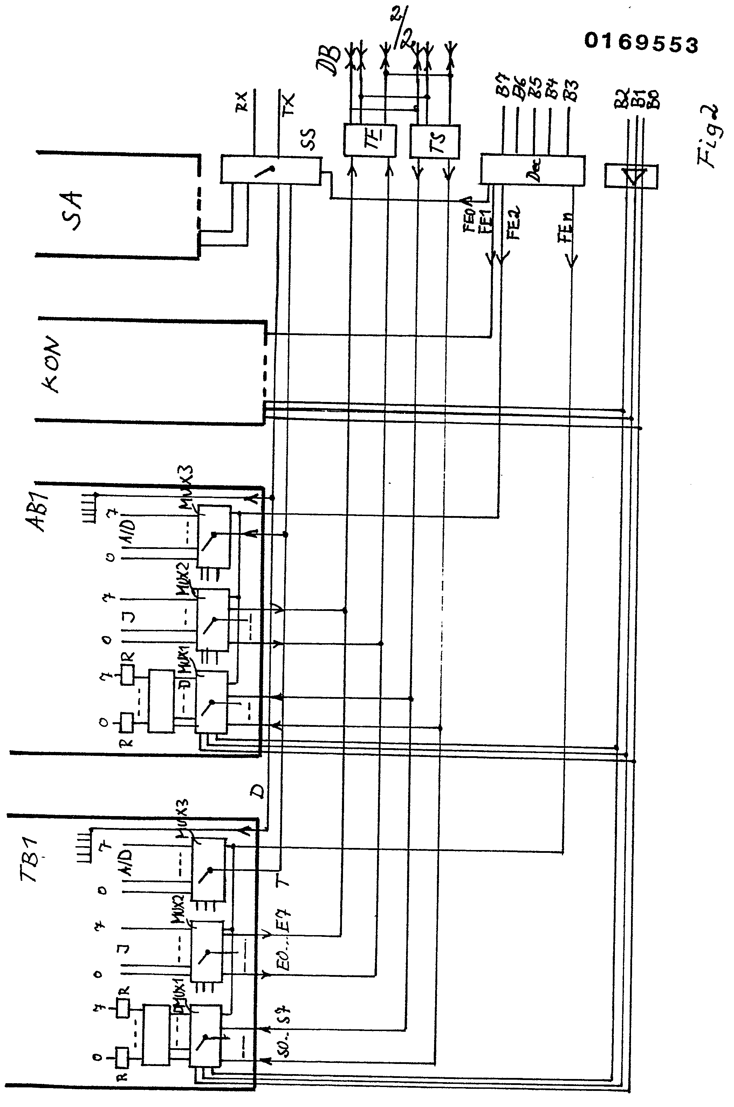

Wie schon angegeben und wie noch im einzelnen anhand von Fig. 2 dargelegt werden wird, werden die für Fernsprechleitungen zugeordnete Satzschaltungen bestimmte bzw. von diesen Satzschaltungen kommende Daten über Multiplexer zu- und abgeführt, was in Fig. 1 bei den Teilnehmerbaugruppen TB und AB mit Datenmultiplexern DMUX angedeutet ist. Sie enthalten dagegen keine Entscheidungslogik, da sämtliche Rechenfunktionen konzentriert durch Einheiten der Steuerungsbaugruppe durchgeführt werden.

Nachstehend werden Einzelheiten des Betriebsablaufs der erfindungsgemäßen Fernsprechanlage und insbesondere die Adressierung der Satzschaltungen anhand von Fig. 2 näher erläutert.

In der Fig. 2 sind eine Reihe von Satzschaltungen angedeutet, nämlich die die Sprechschaltung SA der Abfragestelle, die Konferenzschaltung KON, die Baugruppe AB1, die einen Teil der Leitungssätze enthält, sowie die Baugruppe TB10, die als eine von zehn solcher Baugruppen acht Teilnehmerleitungssätze umfaßt.

Die dargestellten, Fernsprechleitungen zugeordneten Satzschaltungen TB0 und AB1 weisen jeweils drei Multiplexer MUX1 bis MUX3 auf, die dazu dienen, mit dem Mikroprozessor auszutauschende Daten auf die einzelnen Satzschaltungen der Baugruppen zu verteilen bzw. von diesen Satzschaltungen zu sammeln. Demnach ist der Eingang des Multiplexers MUX1 mit den Sendeadern S0 bis S7 verbunden, die über Treiberschaltungen TS am eigentlichen Datenbus DB liegen, der bidirektional betrieben wird. Die Ausgänge des Multiplexers MUX2 sind mit jeweils einer der Indikationsschaltungen der acht Satzschaltungen verbunden, sein Eingang liegt an den Empfangsleitungsadern E0 bis E7 der genannten internen Busleitung, die über eine Treiberschaltung TE mit dem Datenbus DB in Verbindung steht.

Für die Zuführung der Daten an die Codecs der Satzschaltungen ist in Abweichung von der vorstehend erläuterten Konstellation eine Datenleitung D vorgesehen, an der die Eingänge sämtlicher Codecs aller Baugruppen liegen, sowie eine Taktleitung T, die bei den einzelnen Baugruppen an den Eingang des Multiplexers MUX3 führt, dessen Ausgänge jeweils an einen anderen von acht Codecs geführt sind. Die genannte Taktleitung T und Datenleitung D stehen über eine Schnittstellenschaltung SS und über entsprechende Verbindungsleitungen RXTX mit dem Mikroprozessor der Vermittlungsstelle in Verbindung. Die Schnittstellenschaltung SS ist derart umsteuerbar, daß vom Mikroprozessor kommende Takt- und Datensignale statt an die Codecs der Satzschaltungen auch an den Codec der Sprechschaltung SA der Abfragestelle gelangen können.

Die einzelnen Sätze, bzw. sofern diese zu Baugruppen vereinigt sind, die einzelnen Baugruppen werden durch Adressen angesteuert, die auf Adreßleitungen B3 bis B7 auftreten und durch einen Decoder DEC zu entsprechenden Freigabesignalen FE0 bis FEn decodiert werden. Diese Freigabesignale beeinflussen bei den Fernsprechleitungen zugeordneten Baugruppen die erwähnten Demultiplexer DMUX1 bzw. Multiplexer MUX2. Die Einstellung der Multiplexer und Demultiplexer und damit die Auswahl der Satzschaltungen innerhalb einer angesteuerten Baugruppe erfolgt mit Hilfe von Satzadressen, die auf den Adreßleitungen B0 bis B2 auftreten, die jeweils an sämtliche der Multiplexer herangeführt sind. Die im Zusammenhang mit Fig. 1 erwähnte Sprachmultiplexleitung ist in Fig. 2 nicht dargestellt.

Die Adressierung der Satzschaltungen durch die Adressen an den Adreßleitungen B0 bis B7 erfolgt, wie dargelegt nacheinander in einem festen Bedienungszyklus, wobei jeweils sämtliche erforderlichen Vorgänge abgewickelt werden. Es kommt also nicht wie bei bekannten digitalen Fernsprechanlagen vor, daß im Zuge der Bedienung einer Satzschaltung das Programm durch einen Unterbrechungsbefehl abgebrochen wird, um danach die Vorgänge bei einem weiteren Satz zu beeinflussen. Es entfällt daher auch die Notwendigkeit, in gesonderten Speichern die bis zum Abbruch des Programms bei einem bestimmten Satz erhaltenen Daten zwischenzuspeichern und das Programm so zu gestalten, daß nach erneuter Bedienung eines Satzes an der Stelle des Programmabbruchs im vorangegangenen Zyklus fortgefahren wird.

In der Bedienungsreihenfolge der Satzschaltungen liegt die Sprechschaltung SA der Abfragestellung am Anfang. Es folgen die Mehrfrequenzencodeempfänger, der Tongenerator, und die Konferenzschaltung. Als nächstes werden die Amtsleitungssätze bedient und schließlich sind die Satzschaltungen für Teilnehmeranschlußleitungen an der Reihe. Es ist damit das Prinzip eingehalten, daß Satzschaltungen, deren Bedienung viel Zeit erfordern am Anfang des Zyklus bedient werden.

Ein Vermittlungszyklus dauert z.B. 16 ms. Bei der angenommenen Größe einer digitalen Fernsprechanlage werden für die Abarbeitung der Vorgänge bei den einzelnen Satzschaltungen 8 ms benötigt. In ungünstigen Fällen kann es jedoch auch vorkommen, daß die gesamte Zykluszeit benötigt wird, ohne daß sämtliche Satzschaltungen bedient werden können, was sich in der Regel jedoch nicht im jeweils nachfolgenden Bedienungszyklus wiederholen wird, so daß Wahlverfälschungen bei Satzschaltungen für Teilnehmeranschlußleitungen, die in einem solchen Falle einmal übergangen werden, nur mit geringer Wahrscheinlichkeit zu befürchten sind.

Die im Normalfall innerhalb eines Bedienungszyklus verbleibende Zeit wird zur Durchführung von Prüfprogrammen genutzt, in welchem Falle zu Beginn der Abarbeitung der Prüfprogramme ein Überwachungssignal gesendet wird. Wenn die volle Inanspruchnahme der Bedienungszyklen für die Bedienung von Satzschaltungen dadurch hervorgerufen wird, daß die Programmabarbeitung aufgrund eines Fehlers in eine Endlosschleife geraten ist und demnach sich diese Ver-

- 11 -

hältnisse auch über mehrere Bedienungszyklen hinziehen, dann wird wegen des dann festgestellten mehrmaligen Fehlens des Überwachungssignals ein Zeitglied in einer Überwachungsschaltung z.B. nach 60 ms ablaufen können, woraufhin der Steuerrechner in seinem Anfangszustand rückgesetzt wird und ein Initialisierungsprogramm eingeleitet wird, in dessen Verlauf sämtliche Datenspeicher rückgesetzt und sämtliche Codespeicher gelöscht werden.

6 Patentansprüche
2 Figuren

Patentansprüche

1. Digitale Zeitmultiplex-Fernsprechanlage mit kleinen Anschlußzahlen, insbesondere Fernsprechnebenstellenanlage,
dadurch gekennzeichnet, daß
die Satzschaltungen (TS, A, KON, TG, MFV, SA) ihrer Vermittlungsstelle (V) unabhängig von ihrem Funktionstyp vermittlungsstellenseitig gleichartige digitale Schnittstellen aufweisen, daß diese Satzschaltung in festen Bedienungszyklen nacheinander angesteuert werden, woraufhin sämtliche im jeweiligen Fall im Zusammenhang mit dem Aufbau, der Aufrechterhaltung und der Auslösung einer Fernsprechverbindung erforderlichen Vorgänge unabhängig von ihrer Natur und von der durch die insgesamt benötigten Zeit abgewickelt werden, bevor die nachfolgende Satzschaltung angesteuert wird, und daß im Zuge solcher Bedienungszyklen bei Satzschaltungen (TS, A), die Fernsprechleitungen (TL, AL) zugehörig sind, die dort enthaltenen Einrichtungen zu Analog-Digitalwandler und Digital-Analogwandlung (A/D) auf einen Sende- bzw. hier von unterschiedenen Empfangszeitschlitz eines Pulsrahmens eingestellt werden, in denen nach Herstellung der Verbindung über eine bidirektional betriebene Zweidrahtleitung (SM) ein Sprachinformationsaustausch mit einer anderen, einer Fernsprechleitung zugehörigen Satzschaltung stattfindet, deren Einrichtungen zur Analog-Digitalwandlung und Digital-Analogwandlung auf einen dem genannten Sendezeitschlitz entsprechenden Empfangszeitschlitz und auf einen dem genannten Empfangszeitschlitz entsprechenden Sendezeitschlitz eingestellt sind.

2. Fernsprechanlage nach Anspruch 1,
dadurch gekennzeichnet, daß
in den Bedienungszykluszeitspannen nach der Bedienung von Satzschaltungen verbleibende Zeitspannen jeweils für Überwachungsaufgaben ausgenutzt werden.


3. Fernsprechanlage nach einem der Ansprüche 1 oder 2,
d a d u r c h   g e k e n n z e i c h n e t , daß
die für Aufnahme variabler Daten dienende Schreib-Lesespeicher (DS) ihrer Vermittlungssteuerung (PB) jeweils
dann gelöscht werden, wenn während eines Bedienungszyklus bei allen Fernsprechleitungen zugeordneten Satzschaltungen (TS, A) der Betriebszustand "Ruhe" festgestellt worden ist.


4. Fernsprechanlage nach einem der Ansprüche 1 bis 3,
d a d u r c h   g e k e n n z e i c h n e t , daß
der Einstellung der Empfangs- und Sendezeitschlitze
dienende Einstellspeicher der Einrichtungen zu Analog-
Digitalwandlung und Digital-Analogwandlung (A/D) während
der Bedienungszeitspanne der betreffenden Satzschaltung
jeweils gelöscht werden, sofern ein mit Eintreten des
Betriebszustandes "Ruhe" in den Ausgangszustand gesetztes
und während des Andauern dieses Betriebszustandes wiederholt ablaufendes Zeitglied zwischenzeitlich seinen Endzustand erreicht hat.


5. Fernsprechanlage nach einem der Ansprüche 1 bis 4,
d a d u r c h   g e k e n n z e i c h n e t , daß
jeweils mehrere gleichartige Satzschaltungen (TS, A) zu
einer Baugruppe (TB, AB) zusammengefaßt sind, und daß zum
Austausch von Einstell- und Signalisierungsdaten zwischen
den Satzschaltungen und der Vermittlungssteuerung (PB)
über wenigstens eine allen Baugruppen gemeinsame Datenmultiplexleitung (DM; SO bis S7, EO bis E7, D) je Baugruppe mehrere jeweils gleichartigen solcher Daten zugeordnete Demultiplexer (DM; UX1) und Multiplexer (MUX2,
MUX3) vorgesehen sind, die jeweils mit Hilfe einer Baugruppenadresse (B3 bis B7) leitfähig geschaltet und mit Hilfe von Satzadressen (BO bis B2) eingestellt werden.

6. Fernsprechanlage nach Anspruch 5, d a d u r c h   g e k e n n z e i c h n e t , daß für die Zufuhr von Einstelldaten für Einrichtungen zur Analog-Digitalwandlung und Digital-Analogwandlung (A/D) eine gesonderte Datenmultiplexleitung (D), die an sämtliche dieser Einrichtungen geführt ist, sowie eine Taktleitung (T) vorgesehen ist, die zu dem jeweiligen dieser Art von Einstelldaten der betreffenden Baugruppen zugeordneten Multiplexer (MUX3) führt, wobei die auf der gesonderten Datenmultiplexleitung auftretenden Einstelldaten nur dann an eine solche Einrichtung zur Digital-Analogwandlung und Analog-Digitalwandlung gelangen können wenn die auf der Taktleitung (T) auftretenden Taktsignale über den genannten betreffenden Multiplexer (MUX3) auf diese Einrichtung (A/D) durchgeschaltet sind.

Fig. 1

0169553

1/2

Fig 2